# FASCICULE DE BREVET EUROPEEN

(11) **EP 0 756 927 B1**
(45) Date de publication et mention de la délivrance du brevet: **13.06.2001**
(21) Numéro de dépôt: 96202122.6
(22) Date de dépôt: 25.07.1996
(51) Int. Cl.: B29C 45/56

(54) **Procédé de moulage d'une matière thermoplastique par injection sur noyau tournant**
Verfahren zum Spritzgiessen von thermoplastischem Kunststoff auf einem drehenden Kern
Method for injection moulding of thermoplastic material on a rotating core

(30) Priorité: 01.08.1995 BE 9500665
(43) Date de publication de la demande: 05.02.1997
(73) Titulaire: SOLVAY (Société Anonyme), 1050 Bruxelles (BE)
(72) Inventeur: Dehennau, Claude, 1410 Waterloo (BE); Leo, Vito, 1315 Glimes, Incourt (BE); Cuvelliez, Charles, 1640 Rhode-Saint-Genese (BE)
(74) Mandataire: Dambois, Denis Camille Daniel

(56) Documents cités:
- BE-A- 667 335
- BE-A- 696 572
- US-A- 3 907 952

## Description

La présente invention concerne un procédé de moulage d'une matière thermoplastique par injection sur noyau tournant. La technique du moulage par injection sur noyau tournant, décrite notamment dans le brevet US 3 907 952, permet de fabriquer des articles présentant une symétrie de révolution et une résistance mécanique élevée. Elle consiste à injecter une matière thermoplastique en fusion dans un moule dont une partie - généralement une partie centrale que l'on qualifie de noyau - est rotative par rapport à l'autre, et est maintenue en rotation durant l'introduction de la matière thermoplastique dans le moule. Cette technique oriente fortement la matière thermoplastique dans le sens circonférentiel, ce qui permet de compenser l'orientation majoritairement axiale induite par l'injection dans le cas d'un remplissage à partir d'une extrémité du moule, ainsi que "d'effacer" les éventuelles lignes de soudure dans le cas d'un remplissage latéral du moule. On peut ainsi obtenir des articles injectés tels que récipients, cylindres, manchons, etc. dont la résistance mécanique est supérieure à celle des articles injectés au moyen d'une technique classique de moulage par injection, c'est-à-dire dans un moule dont toutes les parties sont immobiles les unes par rapport aux autres.

La fabrication d'un article par injection comprend essentiellement deux phases. Pendant la première, dite phase d'injection ou encore de remplissage, la matière thermoplastique en fusion est injectée dans le moule, avec un débit élevé. Pendant la seconde, dite phase de maintien, la matière thermoplastique, qui occupe alors complètement le moule, est maintenue sous pression, approximativement jusqu'à ce qu'elle soit solidifiée. Pendant la phase de maintien, la matière thermoplastique se refroidit, et se contracte donc. Pour cette raison, un très faible débit de matière thermoplastique ("écoulement de maintien") doit continuer à être injecté dans le moule, jusqu'à la solidification complète, en vue de compenser ce retrait et de maintenir la pression constante. Après la solidification de la matière thermoplastique, l'article peut être retiré du moule.

Dans les variantes connues de la technique d'injection sur noyau tournant, la rotation relative des différentes parties du moule se fait à des moments divers. Pour des raisons de commodité, cette rotation commence généralement dès le début de la phase de remplissage, et se poursuit souvent jusqu'à la fin de la phase de maintien, et même parfois au-delà, c'est-à-dire après qu'on ait cessé de maintenir la matière thermoplastique sous pression. Ce choix paraît logique, car il permet de soumettre le plus longtemps possible la matière thermoplastique, dont encore au moins une partie est à l'état fondu, à des sollicitations permettant de l'orienter de manière circonférentielle.

Cependant, on a maintenant trouvé que certaines caractéristiques, en particulier la résistance mécanique, d'articles fabriqués par le moulage d'une matière thermoplastique par injection sur noyau tournant pouvaient être considérablement améliorées par un choix plus judicieux du moment où est effectuée la rotation relative des différentes parties du moule. On a notamment constaté, de manière surprenante, qu'un arrêt tardif de cette rotation est défavorable aux propriétés mécaniques.

La présente invention concerne un procédé amélioré de moulage d'une matière thermoplastique par injection sur noyau tournant, dans lequel les différentes parties du moule sont en rotation relative pendant au moins une partie de la phase de maintien, qui se caractérise en ce que cette rotation se termine avant la fin de la phase de maintien.

La présente invention a pour objet un procédé de moulage par injection sur noyau tournant selon la revendication 1.

La matière thermoplastique en question comprend au moins un polymère thermoplastique. De préférence, la matière thermoplastique est essentiellement constituée d'au moins un polymère thermoplastique. Tout polymère thermoplastique peut être utilisé, notamment les polymères du chlorure de vinyle, les polyamides et les polyoléfines. De bons résultats ont été obtenus lorsque la matière thermoplastique comprend au moins une polyoléfine. Parmi les polyoléfines, on préfère utiliser des polymères de mono-oléfines, tels que les polymères de l'éthylène et/ou du propylène (y compris leurs copolymères comprenant en outre un ou plusieurs autres monomères).

De bons résultats ont été obtenus lorsque la matière thermoplastique comprend au moins un polymère thermoplastique semi-cristallin. De préférence, au moins 50 % en masse de la matière thermoplastique est constituée d'un ou plusieurs polymères thermoplastiques semi-cristallins. De manière particulièrement préférée, la matière thermoplastique est essentiellement constituée d'un ou plusieurs polymères thermoplastiques semi-cristallins. Par polymères thermoplastiques semi-cristallins, on entend désigner des polymères thermoplastiques qui ne soient pas amorphes. Des exemples de polymères thermoplastiques semi-cristallins sont les polyamides (en particulier aromatiques), le polysulfure de phénylène, le polyéthylène et le polypropylène.

Par ailleurs, il est avantageux d'utiliser des polymères thermoplastiques à cristallisation rapide, tels que par exemple le polyéthylène (PE). En cas de besoin, un agent nucléant peut être ajouté à un polymère thermoplastique qui, en tant que tel, ne présenterait pas une cristallisation rapide.

En outre, la matière thermoplastique utilisée présente de préférence les propriétés généralement requises en vue d'une injection, par exemple une viscosité adéquate, une bonne démoulabilité, une bonne tenue aux cisaillements élevés, une bonne stabilité thermique, etc.

Le procédé de l'invention donne des résultats nettement supérieurs à ceux des procédés antérieurement connus, en particulier lorsqu'il est appliqué à des matières thermoplastiques facilement orientables, notamment à des matières thermoplastiques visqueuses et/ou comprenant une ou plusieurs charges.

En ce qui concerne la viscosité, on préfère tout particulièrement que la matière thermoplastique présente un module de relaxation en cisaillement Gₙ(7,5) supérieur à 0,15.

Gₙ(7,5) désigne la valeur normalisée du module de relaxation en cisaillement de la matière thermoplastique, G(t) (comme décrit par H. M. Laun dans Rheologica Acta, vol. 17, n° 1 (jan./fév. 1978), pp. 1-15, en particulier dans l'équation [8]), à 7,5 secondes et à une température supérieure de 30 °C à la température de fusion de la matière thermoplastique considérée (T_{f} telle que mesurée par DSC (calorimétrie différentielle à balayage) à une vitesse de 10 K par minute). Plus précisément, sur base de mesures des modules élastique et visqueux en fonction de la fréquence d'excitation (de 0,01 à 100 s⁻¹), on déduit le modèle de Maxwell généralisé qui s'en rapproche le plus. Ce modèle permet alors de tracer une courbe représentant l'évolution en fonction du temps du module de relaxation en cisaillement, qu'on normalise de telle sorte que Gₙ(t) = 100 pour t = 0. Autrement dit, Gₙ(t) = 100 x G(t) / G(0). La valeur de Gₙ(t) pour t = 7,5 s est alors relevée sur cette courbe. La demanderesse a constaté que parmi toutes les valeurs de t auxquelles on peut évaluer le module de relaxation en cisaillement Gₙ(t), c'est pour t = 7,5 s qu'il est possible de définir le critère le plus fiable et le plus uniforme permettant de caractériser les matières thermoplastiques donnant les meilleurs résultats lors de leur injection sur noyau tournant.

Ce module de relaxation en cisaillement est de préférence supérieur à 0,2, de manière particulièrement préférée supérieur à 0,3, et idéalement supérieur à 0,5. Par ailleurs, on préfère que la valeur de Gₙ(7,5) soit inférieure à 10, et tout particulièrement inférieure à 5.

Comme exposé ci-dessus, outre au moins un polymère thermoplastique, la matière thermoplastique injectée peut par ailleurs avantageusement comprendre au moins une charge.

Toute charge connue peut être utilisée. Des exemples de charges utilisables, donnés à titre non limitatif, sont le talc, le carbonate de calcium et le mica. On préfère utiliser des charges anisotropes, par exemple en forme de paillettes ou de fibres. L'utilisation de fibres est avantageuse sur le plan des propriétés mécaniques. A titre d'exemples de fibres, on peut citer les fibres de verre et de carbone, ainsi que des fibres polymériques telles que d'aramide. On préfère utiliser une charge comprenant des fibres de verre. L'amélioration des résultats est surtout remarquable lorsque la teneur de la ou des charges dépasse 10 %, et en particulier dépasse 20 %, par rapport au poids total de la matière thermoplastique et de(s) charge(s).

Ces deux variantes concernant l'utilisation d'une matière thermoplastique facilement orientable sont particulièrement intéressantes, le procédé de l'invention conduisant dans ces cas à une augmentation particulièrement marquée des propriétés mécaniques.

Enfin, selon les besoins, la matière thermoplastique peut encore éventuellement contenir un ou plusieurs additifs conventionnels tels que pigments, anti-oxydants, stabilisants, ignifugeants, etc.

Comme indiqué précédemment, l'injection sur noyau tournant consiste à injecter une matière thermoplastique fondue dans un moule comprenant au moins deux parties rotatives l'une par rapport à l'autre, définissant un volume fermé.

Généralement, le moule comprend un élément central (noyau) disposé à l'intérieur d'un élément creux (matrice). Habituellement, le noyau est symétrique de révolution, par exemple cylindrique ou conique, la matrice pouvant être symétrique de révolution ou quasi-symétrique de révolution, c'est-à-dire qu'elle peut éventuellement comporter une ou plusieurs parties non symétriques de révolution, telles que par exemple une nervure ou un bossage s'étendant axialement ou hélicoïdalement, en creux ou en relief, sur au moins une partie de sa longueur. Il est ainsi possible de fabriquer, par exemple, un "cylindre" dont l'évidement central aurait une section circulaire et la surface extérieure une section octogonale. Il est souhaitable que les axes de symétrie ou de quasi-symétrie du noyau et de la matrice soient au moins approximativement confondus, et au moins approximativement parallèles. De préférence, leurs axes sont exactement confondus. Il est commode que le noyau soit rotatif par rapport à la matrice fixe. Rien n'empêche cependant que le noyau soit fixe et la matrice rotative, ou encore que tous deux soient rotatifs à des vitesses différentes.

Bien que le cas le plus courant soit celui d'un noyau présentant une symétrie de révolution, une variante particulière est celle selon laquelle le noyau ne présente pas une symétrie de révolution. A titre d'exemple de cette variante, on pourrait utiliser un noyau dont la section transversale serait polygonale sur au moins une partie de sa longueur.

Lorsqu'on utilise un procédé connu d'injection sur noyau tournant pour fabriquer un article extérieurement non symétrique de révolution, c'est-à-dire un article présentant une ou plusieurs variations d'épaisseur dans le sens circonférentiel, telles que par exemple des nervures ou des ergots sur sa surface extérieure, ces surépaisseurs non symétriques de révolution perturbent l'écoulement circonférentiel de la matière plastique lors de la rotation du noyau, même lorsque celui-ci présente une symétrie de révolution, et on constate (en pratiquant des coupes dans l'article ainsi fabriqué) une recirculation de la matière thermoplastique au droit de ces surépaisseurs non symétriques de révolution (formation de vortex). Ces perturbations de l'écoulement affaiblissent mécaniquement l'article à ces endroits. Ce grave inconvénient, qui est encore plus marqué lorsqu'on utilise une matière thermoplastique facilement orientable, ne se produit pas si l'on utilise un procédé conforme à l'invention : on ne constate dans ce cas aucune perturbation significative de l'écoulement et aucune réduction de la résistance mécanique de l'article à l'endroit des surépaisseurs.

C'est pourquoi l'invention concerne également un procédé de moulage par injection sur noyau tournant tel que défini ci-dessus, dans lequel le moule présente une forme adaptée à la fabrication d'un article comprenant une ou plusieurs surépaisseurs notables non symétriques de révolution. Par surépaisseur notable non symétrique de révolution, on entend désigner une variation d'épaisseur D d'au moins 50 % (c'est-à-dire mesurant au moins 50 % de l'épaisseur de la partie de la paroi de l'article adjacente à cette surépaisseur) se produisant sur une distance circonférentielle inférieure à D. Selon des orientations autres que circonférentielle, la surépaisseur peut s'étendre sur une partie substantielle de l'article, comme par exemple dans le cas d'une nervure parallèle à l'axe de l'article ou hélicoïdale, ou être au contraire fortement localisée, comme dans le cas d'ergots ou embouts latéraux. Le moule doit présenter, en négatif, la forme de l'article à fabriquer.

Comme exposé ci-dessus, les différentes parties du moule sont en rotation relative pendant au moins une partie de la phase de maintien, et la rotation se termine avant la fin de la phase de maintien. En d'autres termes, la rotation ne s'effectue pas entièrement pendant la phase de remplissage. Il est préférable qu'au moins 70 % de la durée de la rotation soit comprise dans la phase de maintien.

La rotation peut commencer à tout moment, par exemple dès le début de la phase de remplissage ou au cours de celle-ci. Toutefois, il est avantageux que cette rotation commence après la fin de la phase de remplissage du moule, c'est-à-dire que la rotation n'intervienne que pendant la phase de maintien.

De manière préférée, la durée de la rotation est d'au moins 10 % de la durée de la phase de maintien, de préférence d'au moins 20 %. De manière particulièrement préférée, elle est par ailleurs d'au plus 90 % de cette durée, et en particulier d'au plus 80 % de cette durée. Généralement, dans le cas d'articles dont l'épaisseur est de l'ordre de 1 à 5 mm, la durée de la rotation est d'environ 10 à 120 s, de préférence de 30 à 80 s. Cette durée est liée à la nature de la matière thermoplastique, et en particulier à son temps de solidification, qui croît approximativement comme le carré de l'épaisseur de l'article.

Selon une variante particulière, la période de rotation relative des différentes parties du moule peut se composer de plusieurs phases de rotation, séparées par des phases d'immobilité. Cette variante conduit à une meilleure répartition de l'orientation au sein de l'article, et à une meilleure atténuation des perturbations de l'écoulement, notamment au droit d'éventuelles surépaisseurs non symétriques de révolution.

La vitesse de rotation relative des différentes parties du moule est avantageusement telle que le taux de cisaillement moyen auquel la matière thermoplastique est soumise soit d'au moins 25 s⁻¹, de préférence supérieur à 30 s⁻¹. Elle est par ailleurs généralement telle que ce taux soit d'au plus 80 s⁻¹, de préférence inférieur à 70 s⁻¹. Le taux de cisaillement moyen en question (en s⁻¹) peut être considéré comme valant 2 π N rₙ / e, où N désigne la vitesse de rotation angulaire du noyau par rapport au moule (en tours par s), rₙ le diamètre de ce noyau, et e l'épaisseur moyenne de la paroi de l'article. Lorsque l'article fabriqué n'est pas exactement symétrique de révolution, mais comprend par exemple une surépaisseur locale non symétrique de révolution, telle qu'une nervure parallèle à l'axe de l'article ou hélicoïdale, l'épaisseur e est celle mesurée hors de ladite surépaisseur, c'est-à-dire qu'il s'agit de l'épaisseur de la plus grande partie de l'article.

On a constaté que le procédé de moulage par injection sur noyau tournant défini ci-dessus est particulièrement avantageux lorsqu'il est appliqué à la fabrication d'articles dont au moins une partie a une épaisseur d'au moins 2 mm, et plus particulièrement d'au moins 3 mm. En effet, le moulage par injection sur noyau tournant de matières thermoplastiques selon un procédé non conforme à l'invention ne permet pas de fabriquer des articles épais de plusieurs millimètres présentant des propriétés mécaniques satisfaisantes ; en particulier, leur résistance à la pression est quasiment identique à celle qu'ils auraient présentée s'ils avaient été injectés sans que le noyau ne frit mis en rotation.

### Exemples

Les exemples suivants illustrent, de façon non limitative, les avantages de l'invention.

Des cylindres de 25 mm de diamètre intérieur, de 32 mm de diamètre extérieur et de 150 mm de long ont été injectés sur une presse d'injection de type Engel 250 T, munie d'une vis de 55 mm de diamètre. Les conditions de l'injection étaient :

| | |
|---|---|
| vitesse d'injection | 20 mm/s |
| pression de maintien (hydraulique) | 40 bars |
| durée de la phase de remplissage | 4 s |
| durée de la phase de maintien | 30 s |
| température de la matière | 260 °C |

Le noyau cylindrique constituant la partie mâle du moule était entraîné par un moteur hydraulique Mannesman Rexroth de type MZA 210A (couple max. 500 Nm à 200 t/min; vitesse max. 350 t/min.), alimenté par un groupe hydraulique Vickers.

La matière thermoplastique était injectée à partir d'une extrémité du moule.

La partie femelle du moule, fixe, était globalement cylindrique, de manière à permettre de fabriquer un tronçon de cylindre tel que défini ci-dessus. Elle comportait toutefois une cavité latérale cylindrique permettant de munir ledit tronçon de cylindre d'un embout cylindrique latéral, perpendiculaire, d'un diamètre intérieur de 12 mm, d'un diamètre extérieur de 18 mm et d'une longueur de 12 mm. Radialement par rapport au tronçon de cylindre, la paroi de cet embout constituait une surépaisseur non symétrique de révolution ayant environ 3,5 fois l'épaisseur de la paroi du tronçon de cylindre. Lors de l'injection de cet embout, son intérieur ne communiquait pas avec l'intérieur du tronçon de cylindre; ce n'est qu'après son injection et son refroidissement que ces deux parties de l'article injecté ont été mises en communication intérieure par perçage de la portion de paroi du tronçon de cylindre constituant le fond de l'embout latéral.

Les propriétés mécaniques sont évaluées au moyen de mesures de la résistance à la pression instantanée d'éclatement.

Ces mesures s'effectuent à la température ambiante, à l'aide d'une pompe manuelle qui permet une mise en pression à une vitesse de 20 bars par seconde. Le cylindre est fermé à ses deux extrémités par des embouts métalliques. En vue de ne mesurer que l'effet de l'orientation circonférentielle générée par la rotation du noyau, on supprime toute sollicitation axiale du cylindre en reliant les deux embouts par une barre d'acier, qui empêche toute déformation longitudinale. Le cylindre est immergé dans un bac rempli d'eau pour éviter tout risque d'explosion. Avant immersion, le cylindre est rempli d'eau pour éviter la formation de poches d'air. On fait croître la pression et on relève à quelle pression le cylindre éclate.

L'influence des conditions d'injection et de rotation du noyau est mise en évidence par les exemples qui suivent.

### Exemple comparatif 1R

Un polyamide aromatique de type IXEF® 1022/9005 (SOLVAY), chargé de 50 % en masse de fibres de verre, est injecté sans rotation du noyau. La résistance instantanée à l'éclatement du cylindre obtenu est de 200 bars.

### Exemple comparatif 2R

On a répété l'exemple 1R, mais en mettant cette fois le noyau en rotation, de manière à imposer à la matière plastique un taux moyen de cisaillement de 45 s⁻¹. Le noyau est mis en rotation pendant 36 s à compter de la fin du remplissage du moule ; c'est-à-dire que la rotation se poursuit au-delà de la fin de la phase de maintien. La résistance instantanée à l'éclatement du cylindre obtenu est de 350 bars. On note cependant une recirculation des fibres de verre au droit de la surépaisseur non symétrique de révolution, et c'est à cet endroit que la pièce se rompt, ce qui traduit une faiblesse locale.

### Exemple comparatif 3R

Un polysulfure de phénylène (PPS) chargé de 40 % en masse de fibres de verre (FV), commercialisé par Solvay sous la marque Primef® 4010/9000 est injecté sans mettre le noyau en rotation. On obtient une résistance instantanée à l'éclatement de 120 bars.

### Exemple 4

On reproduit l'exemple 2R mais en mettant cette fois le noyau en rotation pendant 20 s à compter de la fin de la phase de remplissage, et de manière à produire un taux de cisaillement moyen de 45 s⁻¹. On obtient une résistance instantanée à l'éclatement de 450 bars et une coupe ne révèle aucune recirculation des fibres au droit de la surépaisseur.

### Exemple 5

L'exemple 4 est répété mais en imposant un taux de cisaillement moyen de 66 s⁻¹. On obtient une résistance instantanée à l'éclatement de 450 bars et une coupe ne révèle aucune recirculation des fibres au droit de la surépaisseur.

### Exemple 6R

On reproduit l'exemple 3R mais en mettant cette fois le noyau en rotation pendant 20 s à compter de la fin de la phase de remplissage, et de manière à produire un taux de cisaillement moyen de 23 s⁻¹. On obtient une résistance instantanée à l'éclatement de 280 bars et une coupe révèle une recirculation des fibres au droit de la surépaisseur. C'est d'ailleurs à cet endroit que la pièce s'est rompue.

### Exemple 7

L'exemple 3R est répété, en mettant le noyau en rotation pendant 20 s de manière à imposer un taux de cisaillement moyen de 45 s⁻¹. On obtient une résistance instantanée à l'éclatement de 340 bars et une coupe ne révèle aucune recirculation des fibres au droit de la surépaisseur.

| Exemple | Matériau | Rotation du noyau (après remplissage) | | | Résistance instantanée à l'éclatement (bars) | Recirculation des fibres de verre |
|---|---|---|---|---|---|---|
| | | | taux de cisaillement (s⁻¹) | durée (s) | | |
| 1R | Polyamide IXEF 1022/9055 | non | - | - | 200 | - |
| 2R | | oui | 45 | 36 | 350 | oui |
| 4 | | | | 20 | 450 | non |
| 5 | | | 66 | | 450 | non |
| 3R | PPS PRIMEF 4010/9000 | non | - | - | 120 | - |
| 6R | | oui | 23 | 20 | 280 | oui |
| 7 | | | 45 | | 340 | non |

## Revendications

1. Procédé de moulage d'une matière thermoplastique par injection sur noyau tournant, dans lequel les différentes parties du moule sont en rotation relative pendant au moins une partie de la phase de maintien et dans lequel cette rotation se termine avant la fin de la phase de maintien, caractérisé en ce que cette rotation dure environ de 10 s à 120 s et est telle que le taux de cisaillement moyen auquel la matière thermoplastique est soumise est d'au plus 80 s⁻¹.

2. Procédé selon la revendication 1, dans lequel la matière thermoplastique comprend au moins une polyoléfine.

3. Procédé selon l'une des revendications précédentes, dans lequel la matière thermoplastique comprend au moins un polymère thermoplastique semi-cristallin.

4. Procédé selon l'une des revendications précédentes, dans lequel la matière thermoplastique comprend au moins une charge.

5. Procédé selon l'une des revendications précédentes, dans lequel le moule présente une forme adaptée à la fabrication d'un article comprenant une ou plusieurs surépaisseurs notables non symétriques de révolution.

6. Procédé selon l'une des revendications précédentes, dans lequel la rotation n'intervient que pendant la phase de maintien.

7. Procédé selon l'une des revendications précédentes, dans lequel la durée de la rotation est d'au moins 10 %, et d'au plus 90 %, de la durée de la phase de maintien.

8. Procédé selon l'une des revendications précédentes, dans lequel le taux de cisaillement moyen auquel la matière thermoplastique est soumise est d'au moins 25 s⁻¹.

9. Procédé selon l'une des revendications précédentes, appliqué à la fabrication d'articles dont au moins une partie a une épaisseur d'au moins 2 mm.

## Patentansprüche

1. Verfahren zum Spritzgießen eines thermoplastischen Materials auf einem drehenden Kern, bei dem sich die verschiedenen Teile der Form zumindest während eines Teils der Nachdruckphase in Relativdrehung befinden, und bei dem diese Drehung vor dem Ende der Nachdruckphase endet, dadurch gekennzeichnet, dass diese Drehung ungefähr von 10 s bis 120 s lang dauert und derart ist, dass das mittlere Scherungsmaß, dem das thermoplastische Material unterworfen wird, höchstens 80 s⁻¹ beträgt.

2. Verfahren nach Anspruch 1, bei dem das thermoplastische Material mindestens ein Polyolefin umfasst.

3. Verfahren nach einem der vorangehenden Ansprüche, bei dem das thermoplastische Material mindestens ein halbkristallines thermoplastisches Polymer umfasst.

4. Verfahren nach einem der vorangehenden Ansprüche, bei dem das thermoplastische Material mindestens einen Füllstoff umfasst.

5. Verfahren nach einem der vorangehenden Ansprüche, bei dem die Form eine Gestalt aufweist, die für die Fertigung eines Gegenstandes angepasst ist, der eine oder mehrere bedeutende Überdicken aufweist, welche nicht rotationssymmetrisch sind.

6. Verfahren nach einem der vorangehenden Ansprüche, bei dem die Drehung nur während der Nachdruckphase eingreift.

7. Verfahren nach einem der vorangehenden Ansprüche, bei dem die Dauer der Drehung mindestens 10% und höchstens 90% der Dauer der Nachdruckphase beträgt.

8. Verfahren nach einem der vorangehenden Ansprüche, bei dem das mittlere Scherungsmaß, dem das thermoplastische Material unterworfen wird, mindestens 25 s⁻¹ beträgt.

9. Verfahren nach einem der vorangehenden Ansprüche, angewandt für die Fertigung von Gegenständen, von denen mindestens ein Teilbereich eine Dicke von mindestens 2 mm aufweist.

## Claims

1. Process for moulding a thermoplastic material by injection onto a rotating core, in which the various parts of the mould are in relative rotation during at least a portion of the dwell stage and in which this rotation ends before the end of the dwell stage, characterized in that this rotation lasts approximately from 1 to 120 s and is such that the average shear rate to which the thermoplastic material is subjected is not more than 80 s⁻¹.

2. Process according to Claim 1, in which the thermoplastic material includes at least one polyolefin.

3. Process according to either of the preceding claims, in which the thermoplastic material includes at least one semicrystalline thermoplastic polymer.

4. Process according to one of the preceding claims, in which the thermoplastic material includes at least one filler.

5. Process according to one of the preceding claims, in which the mould has a shape adapted to the manufacture of an article including one or a number of appreciable extra thicknesses which are not symmetrical in revolution.

6. Process according to one of the preceding claims, in which the rotation intervenes only during the dwell stage.

7. Process according to one of the preceding claims, in which the rotation period is at least 10 %, and not more than 90 %, of the duration of the dwell stage.

8. Process according to one of the preceding claims, in which the mean shear rate to which the thermoplastic material is subjected is at least 25 s⁻¹.

9. Process according to one of the preceding claims, applied to the manufacture of articles in which at least a portion has a thickness of at least 2 mm.
